# EUROPEAN PATENT APPLICATION

(11) **EP 3 670 457 A1**
(43) Date of publication of application: **24.06.2020**
(21) Application number: 18214422.0
(22) Date of filing: 20.12.2018
(51) Int. Cl.: C02F 1/42, B01D 61/02, B01D 61/04, B01D 61/08, B01D 61/12, C02F 1/44, C02F 1/68, C02F 1/20

(54) **METHOD AND APPARATUS FOR REVERSE OSMOSIS WATER PURIFICATION**

(71) Applicant: Brita GmbH, 65232 Taunusstein (DE)
(72) Inventor: KÖHLER, André, 65329 Hohenstein (DE); WEIDNER, Peter, 92444 Rötz (DE); SCHMEINCK, Nils, 95326 Kulmbach (DE)

(57) **Abstract**

The invention relates to a method and an apparatus for reverse osmosis water purification. The method comprises: receiving untreated or treated water at a first pressure, producing permeate water by means of a reverse osmosis water purification unit (RO-unit, 10) at a second, lower pressure, conducting the permeate water containing CO₂ dissolved therein from the RO-unit to a buffer storage unit (30) having a permeate reservoir (31), thereby filling the permeate reservoir (31), and conducting the permeate water from the permeate reservoir (31) to a pump chamber (44) of a permeate pump (40). It is characterized in that the permeate reservoir (31) of said buffer storage unit (30) contains a porous filling material (34) providing a surface, whereby, when the permeate water encounters the surface of the filling material, gaseous CO₂ is accumulated at the surface of the filling material thereby providing a compressible buffer volume.

## Description

The present invention relates to a method and apparatus for reverse osmosis water purification. The method comprises:
- receiving untreated or pre-treated water at a first pressure,
- producing permeate water by means of a reverse osmosis water purification unit (RO-unit) at a second pressure that is lower than the first pressure of said untreated or treated water,
- conducting the permeate water from the RO-unit to a buffer storage unit having a permeate reservoir thereby, at least partially, filling the permeate reservoir with the permeate water, the permeate water containing CO₂ dissolved therein,
- conducting the permeate water from the permeate reservoir to a pump chamber of a permeate pump.

The apparatus comprises:
- a reverse osmosis water purification unit (RO-unit) having a membrane housing encasing a semi-permeable membrane, an inlet, a concentrate outlet and a permeate outlet, the RO-unit being arranged for receiving untreated or pre-treated water through said inlet at a first pressure and producing permeate water provided via said permeate outlet at a second pressure that is lower than the first pressure of the untreated or pre-treated water,
- a buffer storage unit having a permeate reservoir, an inlet being coupled to said permeate outlet of the RO-unit and an outlet, and
- a permeate pump having a diaphragm that separates a pump chamber from a working chamber, the pump chamber being coupled to said outlet of the buffer storage unit and the working chamber being coupled to said concentrate outlet of the RO-unit.

Such apparatus and method are utilized in conditioning water, particularly mains water, in order to provide potable water of good quality. The untreated or pre-treated water is introduced through the inlet into the membrane housing at the first pressure. Due to a drop in pressure over the semi-permeable membrane from the inlet side of the housing to the permeate side, water and CO₂ passes the membrane while ions in solution such as salts and undissolved larger molecules are retained by the membrane and accumulate on the concentrate side of the membrane in the concentrate chamber. In that way the RO-unit delivers concentrate water through the concentrate outlet at almost the first pressure and permeate water through the permeate outlet at the second pressure that is lower than the first pressure. The expressions "concentrate" and "retentate" are herein used synonymously as are the expressions "filtrate" and "permeate". The terms "pre-treated water" and "treated water" may be understood as synonyms. In particular, these terms may be used to refer to water undergoing any treatment upstream of the method and apparatus according to the current application. Typically, "untreated water" is used to refer to water not undergoing any treatment upstream of the method and apparatus according to the current application and in particular may refer to main water.

The method and apparatus is generally known in the art for example from document DE 42 13 714 C1 or document US 5,460,716. The documents disclose drinking water purifiers solving a problem particularly associated with reverse osmosis purification, namely, the fact that the production amount and permeate quality significantly depend on the differential pressure between the untreated water and the permeate water passing the semi-permeable membrane. The lower the counter pressure on the permeate side, the better is the permeate quality and the production effectivity. These documents suggest to utilize the pressure of the incoming untreated water as the drive energy for a permeate pump being connected downstream to the RO-unit via a permeate duct. The permeate pump is formed by a diaphragm pump as mentioned initially. The pump chamber receives the permeate water exiting the RO-unit under low pressure, whereby the diaphragm is bent into one direction (filling phase). When the maximum capacity of the pump chamber has been reached the discharge of the permeate is stopped by a first pressure holding valve put into the permeate duct. At the same time a second pressure holding valve put into a concentrate duct connecting the concentrate outlet of the RO-unit with the working chamber of the permeate pump is opened. Thereby concentrate is introduced into the working chamber of the permeate pump having at least a higher pressure than the permeate water passing the semi-permeable membrane. Particularly the working pressure is almost as high as the initial pressure of the untreated water. If necessary, the working pressure may be set to have a lower constant pressure by means of a restrictor put into the concentrate duct. Nevertheless, in this manner the diaphragm is now bent into the reverse direction and acts as a pump which pushes the permeate collected in the pump chamber out of the permeate pump ideally without a significant pressure loss, i.e. at almost the same pressure of the concentrate water (pumping phase). When the pump chamber has been emptied the second pressure holding valve is closed and the first pressure holding valve is opened again so that the cycle starts from the beginning.

In order to avoid a higher dynamic pressure built up on the permeate side of the RO-unit during the pumping phase, a permeate reservoir or surge tank is placed in the permeate duct receiving the permeate water produced during the pumping phase so that the RO-unit can continue to work.

However, there are problems associated with surge tanks. These tanks comprise a movable diaphragm, e.g. in form of a sliding bed or a flexible membrane, separating the water from the air inside the tank. When water is filled into the tank the diaphragm is moved into one direction thereby executing mechanical work against the resistance of the diaphragm. The inertia of the diaphragm finally lowers the efficiency of the apparatus. Moreover, the pressure in the tank increases proportionally to the decreasing remaining volume. Thus the pressure on the permeate side is not constant, neither during the filling phase nor during the pumping phase, leading to alternating permeate quality.

The object of the invention thus is to improve the yield and water quality of the water purification method and apparatus utilizing reverse osmosis.

The object is solved by the above method for reverse osmosis, wherein the permeate reservoir of said buffer storage unit contains a surface, in particular for CO₂ accumulation, whereby, when the permeate water encounters the surface of the filling material, gaseous CO₂ is accumulated at the surface, thereby providing a compressible buffer volume.

Accordingly, the object is further solved by the above apparatus for reverse osmosis, wherein the permeate reservoir of the buffer storage unit contains a plurality of nucleation sites for accumulation of gaseous CO₂.

The invention utilizes CO₂ gas dissolved in the permeate water to build up a gas buffer in the permeate reservoir. In order to accelerate this CO₂ accumulation process the invention makes use of surface, in particular a surface area, and thus a plurality of nucleation sites where CO₂ bubbles are being formed and grow. These bubbles are compressible and generally function similar to the air in the known surge tanks.

One difference compared to surge tanks is that the permeate reservoir according to the invention does not require a movable diaphragm separating the air from the water as there is no other gas but CO₂ involved during buffering the permeate. Therefore, compressing the gas volume does not require additional mechanical work.

Another difference compared to known buffers is that the CO₂ dissolves in the permeate water depending on the pressure in the permeate reservoir. When the filling phase starts, i.e. the pump chamber of the permeate pump opens, the pressure in the permeate duct and in the permeate reservoir drops. Immediately the permeate water starts to degas so that discharging CO₂ counteracts the pressure drop. In comparison to standard buffers or surge tanks the pressure in the permeate duct and in the permeate reservoir is kept at a more constant level providing an almost constant flow of permeate into the pump chamber during the filling phase. This way either the filling phase can be shortened or the permeate quality can be kept at a constantly high level or a compromise can be chosen. For example, the inventors discovered that, utilizing the method according to the invention, a yield of between 45% and 55% (ratio of permeate water delivered by the permeate pump to untreated water) can be achieved while under the same conditions but without utilizing the buffer storage unit the yield did not exceed 35%. In any case the volume of the permeate reservoir can be kept comparably small as the permeate pressure does not only depend on the available volume of the reservoir but also on the amount of CO₂ dissolved in the permeate water. The amount of CO₂ in turn depends on the carbonate hardness of the untreated water. The more calcium and hydrogen carbonate ions are in solution in the untreated water the more CO₂ potentially can pass the membrane of the RO-unit and will then be dissolved as free CO₂ in the permeate water.

It is preferred, that the buffer storage unit contains a filling material providing the surface, in particular for CO₂ accumulation, whereby, when the permeate water encounters the surface of the filling material, gaseous CO₂ is accumulated at the surface of the filling material, thereby providing a compressible buffer volume.

Preferred filling materials include porous filling materials, activated carbon and/or non-woven materials.

In an preferred embodiment the buffer storage unit comprises a head portion including the inlet and the outlet and the permeate reservoir is formed as an exchangeable cartridge removably connected to the head portion. This arrangement is useful as it allows to easily replace the porous filling material, for example, once it is worn out.

If, however, the permeate "naturally" will not contain enough CO₂, or in other words the permeate does not contain enough CO₂ for ideal buffering, preferably, the water is treated before or while being filled into the permeate reservoir by means of a water treatment device to such an extent that the CO₂ content of the permeate water in the permeate reservoir has a specific amount leading to the required water quality and purification efficiency. This goal is preferably achieved in one and/or both of the following two ways:
Regarding the method, either the untreated water is treated before the step of producing permeate water by means of a water treatment device, and/or the permeate water is treated before and/or during the step of filling the permeate reservoir by means of a water treatment device. In any case, the water preferably is treated to such an extent that the CO₂ content of the permeate water being filled into the permeate reservoir amounts to at least 0,1 mmol/I and preferably to at least 0,2 mmol/l.

Accordingly, the apparatus either comprises a water treatment device having an untreated water inlet and a pre-treated water outlet, the pre-treated water outlet being coupled to said inlet of the RO-unit. Or it comprises a water treatment device having a permeate inlet and a treated water outlet, the permeate inlet being coupled to said permeate outlet of the RO-unit and the treated water outlet being coupled to said inlet of the buffer storage unit. Any of the water treatment devices preferably is arranged to adjust the CO₂ content of the permeate water being filled into the permeate reservoir to at least 0,1 mmol/I and preferably to at least 0,2 mmol/l.

The water treatment devices preferably can be of the ion exchange type including a cation exchange material arranged for predominantly replacing calcium and magnesium ions by hydrogen ions. This kind of water treatment applies preferably to untreated water only.

According to the method, therefore, the untreated water is preferably treated by ion exchange, thereby, at least partially, replacing calcium and magnesium ions by hydrogen ions.

If the membrane filtration taking place in the RO-unit effectively removes ions or salts leading to drinking water with low mineral contents, the permeate water is pure in minerals such that ion exchange is very ineffective to produce a significant amount of CO₂. In order to convert enough carbonate ions present in the untreated water to free CO₂, the water treatment devices of the ion exchange type therefore most preferably is placed upstream of the RO-unit to provide pre-treated water at the inlet of the RO-unit. Such an ion exchange process is generally known in the art for example from EP 3 141 529 A1.

An alternative method provides for treating the water by supplying gaseous CO₂ either to the untreated water or to the permeate water, respectively, at a pressure adequate to achieve the desired CO₂ content of at least 0,1 mmol/l and preferably of at least 0,2 mmol/l in the permeate water being filled into the permeate reservoir.

Accordingly, the water treatment device comprising a gaseous CO₂ supply can be arranged in two generally different ways: Either the gaseous CO₂ supply communicates with an untreated water duct being coupled to said inlet of the RO-unit or it communicates with a permeate duct being coupled to the inlet of the buffer storage unit which is equivalent to the gaseous CO₂ supply directly communicating with the permeate reservoir, for example via a separate CO₂ inlet of the buffer storage unit.

In both cases the gaseous CO₂ supply is arranged to charge the water with gaseous CO₂ at a pressure adequate to achieve the CO₂ concentration of at least 0,1 mmol/l and preferably of at least 0,2 mmol/l in the permeate water being filled into the permeate reservoir.

The gaseous CO₂ formation at the surface of the porous filling material was found to be particularly effective if the porous filling material provides a porosity of between 40% and 50%.

The inventors discovered that the invention performs increasingly better in a range where a volume of the porous filling material, particularly a porous filling material providing a porosity of between 40% and 50%, is at least 20 times, preferrably at least 50 times and most preferrably at least 100 times larger than a maximum capacity of pump chamber.

While the porous filling material can be an open pored solid of any kind such as a spongy body it is preferably a granular filling material comprising particles. More preferably the particles have an average particle size between 0,5 mm and 4 mm.

Particles in general and particularly particles at that size are easy to manage, have a good hydraulic conductivity and have a surface great enough to provide the desired number of nucleation sides for forming and reliably holding CO₂ bubbles even if the lifting force exerted by the bubbles increases with the number and size of the bubbles.

It is particularly preferable if the granular filling material comprises at least one material, in particular a mineral, contributing to carbonate hardness of the water passing through the permeate reservoir. Preferred examples are materials, in particular minerals, selected from calcium carbonate (CaCO₃ - calcite), magnesium carbonate (MgCO₃ - Magnesite), magnesium oxide (MgO) and calcium magnesium carbonate (CaMg(CO₃)₂ - Dolomite).

Such materials, in particular minerals, combine the above described effect of gaseous CO₂ formation with the further effect of re-mineralization of the permeate water. Such re-mineralization process is known in the art for example from EP 3 141 529 A1. However, if the water pre-treatment by way of ion exchange in combination with membrane filtration in the RO-unit is effective in removing, for example, calcium ions, the permeate is very pure of such materials, in particular minerals, that afterwards need to be dissolved in order to provide drinking water with acceptable properties. According to the invention it is therefore particularly important to provide an amount of CO₂ at the stage of the buffer reservoir high enough to provide enough bubble formation and to make sure that enough of such materials, in particular minerals, can be dissolved in the permeate at the same time. This goal is achieved with the adjusted CO₂ content of at least 0,1 mmol/l and preferably of at least 0,2 mmol/l. On the other hand, the CO₂ content preferrably does not exceed 2 mmol/l and more preferrably it does not exceed 1,5 mmol/l in order to obtain good drinking water quality.

In case of these materials, in particular minerals, the gaseous CO₂ formation at the surface of the porous filling material was found to be particularly effective if the porous filling material has a mean density of between 1,3 and 1,6 kg/I.

Either one of the water treatment devices, the RO-unit and the buffer storage unit, are preferably formed to comprize an exchangeable cartridge. Through this, the cation exchange material or the gaseous CO₂ source, the semi-permeable membrane and the porous filling material, respectively, can easily be removed and replaced by a new one or recovered.

The invention will be explained in further detail with reference to the accompanying drawings, showing in
- Fig. 1: a schematic of a first embodiment of the water purification apparatus;
- Fig. 2: a schematic of a second embodiment of the water purification apparatus including a water treatment device of the ion exchange type;
- Fig. 3: a schematic of a third embodiment of the water purification apparatus including a water treatment device of the gas supply type arranged at a first location and
- Fig. 4: a schematic of a fourth embodiment of the water purification apparatus including a water treatment device of the gas supply type arranged at a second location.

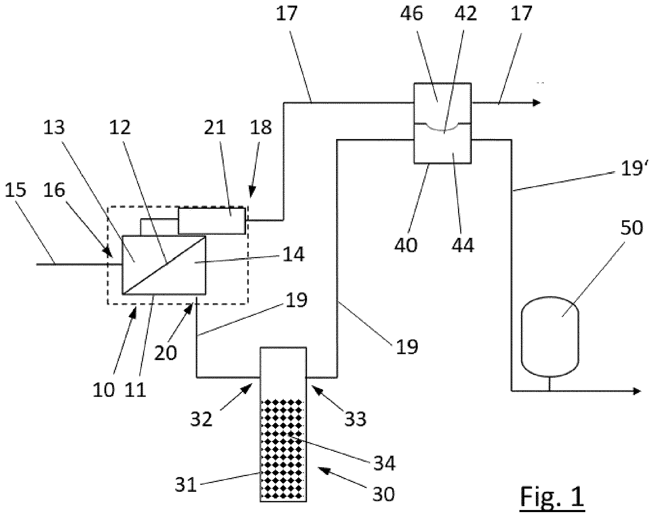

Fig. 1 schematically illustrates a first embodiment of the water purification apparatus according to the invention. The apparatus comprises a reverse osmosis (RO) water purification unit 10 having a membrane housing 11 encasing a semi-permeable membrane 12. The semi-permeable membrane 12 divides a chamber provided inside housing 11 into a concentrate chamber 13 and a permeate chamber 14. An untreated water duct 15 is connected to the concentrate chamber 13 via inlet 16 of the RO-unit 10. Also connected to the concentrate chamber 13 is a concentrate duct 17 via concentrate outlet 18. The permeate chamber 14 is connected to a permeate duct 19 via permeate outlet 20.

The membrane 12 is to be understood as a place holder for a variety of actual membrane arrangements covering for example a single membrane as well as one or more membrane modules, e.g. in the form of a spiral wound membrane module, a hollow fiber membrane module, a tubular membrane module and/or a membrane in sheet form mounted on a frame. The membrane or membranes may factually be non-porous or have a pore size of at most 10 Å or may be composite, e.g. with a porous sublayer and a nonporous top layer. The membrane 12 is effective to at least partially remove ions or larger molecules from the untreated water while it is predominantly permeable to small molecules. Particularly water and CO₂ can diffuse through vacancies in the molecular structure of the membrane material, whereas ions in solution such as salts and larger undissolved molecules are retained. An example of such suitable membrane is a composite membrane comprising a support layer with a thickness of approximately 120 µm made of polyester, an ultrafiltration membrane with a thickness of approximately 40 µm made of polysulfone or polyethersulfone and an active layer with a thickness of approximately 200 nm made of polyamide or cellulose acetate.

The RO-unit 10 is arranged for receiving untreated water through the inlet 16 filling the concentrate chamber 13 of the membrane housing at a first pressure. As the water and CO₂ molecules pass the semi-permeable membrane 12 the pressure drops across the membrane 12 and the filtrate or permeate arriving in the permeate chamber 14 has a second pressure that is lower than the first pressure of the untreated water. The permeate water is delivered at that pressure through the permeate outlet 20. Ions and larger molecules retained by the membrane 12 are accumulated in the concentrate chamber 13 and delivered in form of concentrate water or retentate through the concentrate outlet 18.

The RO-unit 10 further comprises a restrictor 21 interposed between the membrane housing 11 and an inlet of a permeate pump 40. The restrictor 21, for example in form of a capillary or an apperture, has the purpose to maintain a pressure in the concentrate chamber sufficient to operate the RO-unit also during a pumping phase described below.

Preferrably, the RO-unit 10 may be configured to operate as a cross-flow filtration device. The RO-unit 10 may particularly be configured to comprise a head portion and an exchangeable cartridge removably connected to the head portion (details not shown), the head portion including the inlet connection 16 to the untreated water duct 15 and the outlet connections 18, 20 to the concentrate duct 17 and to the permeate duct 19, respectively. The cartridge then includes the semi-permeable membrane, the concentrate chamber and the permeate chamber. The restrictor 21 may be realized as a part of the cartridge or arranged in the cartridge or, more preferrably, as a part of the head portion or in the head portion of such RO-unit.

The apparatus further comprises a buffer storage unit 30 having a permeate reservoir 31 downstream the RO-unit along the permeate duct. The permeate reservoir 31 is coupled via inlet 32 and the permeate duct 19 to the permeate outlet 20 of the RO-unit 10. The permeate reservoir 31 contains a porous filling material 34 providing a plurality of nucleation sites for accumulation of gaseous CO₂. Preferably the porous filling material 34 is a granular material comprising particles and provides an overall porosity of between 40% and 50%.

Preferrably, the buffer storage unit 30 may be configured to comprise a head portion (not separately shown) including inlet 32 and outlet 33 connections to the permeate duct 19 while the permeate reservoir is formed as an exchangeable cartridge removably connected to the head portion. Particularly in case of utilizing the filling material 34 also for mineralization, this arrangement is useful as it allows to easily replace the filling material once it is worn out.

The permeate reservoir 31 further is coupled via outlet 33 and the permeate duct 19 to the permeate pump 40 and more particularly to a pump chamber 44 being part of the permeate pump 40. The permeate pump 40 further has a diaphragm 42 that separates the pump chamber 44 from a working chamber 46. The working chamber 46 is coupled via concentrate duct 17 and the restrictor 21 to the concentrate outlet 18 of the RO-unit (10) as explained above. Irrespective of a minor pressure drop over the restrictor 21 this arrangement allows to utilize the initial pressure of the untreated water as the drive energy for the permeate pump 40.

Finally the apparatus according to this embodiment comprises an accumulator 50 connected to the permeate duct 19' downstream the permeate pump 40. The accumulator 50 is the last module in the permeate duct before its discharge end.

The permeate reservoir 31 of the buffer storage unit 30 receives permeate water via permeate duct 19 and inlet 32 from the RO-unit 10. CO₂ gas dissolved in the permeate water builds up and continuously gains a gas buffer along the surface of the porous filling material 34 in the permeate reservoir 31. These bubbles due to their compressibility are utilized to form a buffer volume in the permeate reservoir 31.

When the pump chamber 44 of the permeate pump 40 is opened by means of a first pressure holding valve (not shown) the filling phase starts. The first pressure holding valve can, for example, be put into the permeate duct 19 somewhere between the permeate reservoir 31 and the permeate pump 40 and it is preferrably an integral part of the permeate pump. In the beginning of the filling phase the pressure in the permeate duct 19 and in the permeate reservoir 31 drops. Immediately the permeate water starts to degas so that the CO₂ bubbles grow. Forming CO₂ bubbles thus counteracts the pressure drop so that the permeate reservoir is kept at a more constant pressure level and the flow of permeate into the pump chamber 44 is almost constant. Thereby the diaphragm 42 is bent into one direction (upwards according to the schematic).

When the maximum capacity of the pump chamber 44 has been reached the discharge of the permeate is stopped by closing the first pressure holding valve. At the same time a second pressure holding valve (not shown) opens the duct to the working chamber 46 of the permeate pump 40. The pumping phase starts. The second pressure holding valve can, for example, be put somewhere into the concentrate duct 17 between the RO-unit 10 and the permeate pump 40 and it is preferrably an integral part of the permeate pump. Now concentrate can flow into the working chamber 46 at a higher pressure than the permeate water. Depending on the pressure drop over the restrictor 21 the working pressure may be a little bit lower than the pressure of the incoming untreated water but still higher than the pressure of the permeate water. In this manner the diaphragm 42 is bent into the opposite direction (downwards according to the schematic) and acts as a pump pushing the permeate water at the increased pressure out of the pump chamber 44 via the permeate duct 19' into the accumulator 50. The permeate water, instead of being pumped into the accumulator 50, alternatively could be directly delivered via permeate duct 19' to a consumer or to an appliance such as a coffee dispenser, or the like. When the pump chamber 44 has been emptied the second pressure holding valve is closed and the first pressure holding valve is opened again so that the cycle starts from the beginning.

Immediately after closing the first pressure holding valve during the pumping phase the pressure in the permeate duct 19 and in the permeate reservoir 31 increases. However, as the CO₂ bubbles are compressible and, in addition, at a higher pressure more CO₂ can be dissolved in the permeate water, the pressure rise is attenuated. As a result, the RO-unit can continue to produce permeate water at a moderate and more constant pressure level and thus at a still satisfying permeate quality.

The porous filling material 34 not only provides an increased surface for building up the CO₂ gas buffer but may also function as a source for re-mineralization of the permeate water. The minerals may include any mineral or mixture of minerals for increasing the carbonate hardness of the water passing through the permeate reservoir 31. They may include at least one of calcium carbonate (CaCO₃ - Calcite), magnesium carbonate (MgCO₃ - Magnesite), magnesium oxide (MgO), calcium magnesium carbonate (CaMg(CO₃)₂ - Dolomite), calcium oxide (CaO), magnesium hydroxide (Mg(OH)₂) and calcium hydroxide (Ca(OH)₂). The CO₂ concentration in the permeate determines the solubility of these minerals and thus the carbonate hardness of the re-mineralized water finally delivered by the apparatus.

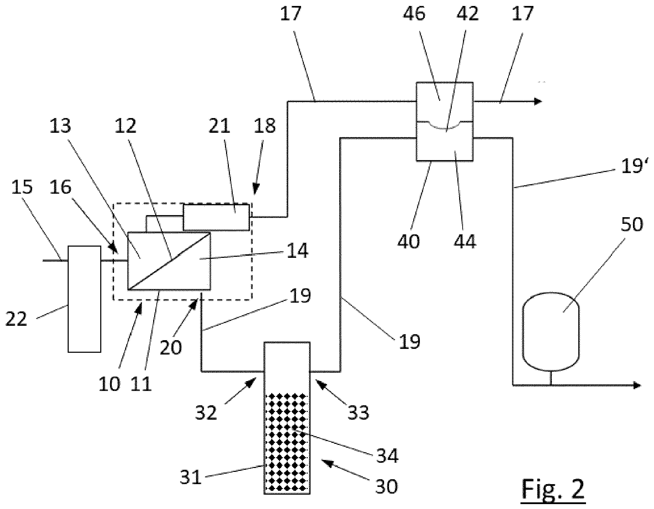

Fig. 2 schematically illustrates a second embodiment of the water purification apparatus according to the invention. The only difference compared to the embodiment of Fig. 1 is that the apparatus further includes a water treatment device 22.

The water treatment device 22 is put into the untreated water duct 15 upstream of the inlet 16 of the RO-unit 10. It has an untreated water inlet and a pre-treated water outlet. The pre-treated water outlet is coupled to said inlet 16.

The water treatment device 22 at this position is of the ion exchange type. It is arranged to adjust the CO₂ content of the permeate water downstream the RO-unit 10 being filled into the permeate reservoir 32 to at least 0,1 mmol/l and preferably to at least 0,2 mmol/l.

The ion exchange water treatment device 22 may also be configured to comprise a head portion including inlet and outlet connections to the untreated water duct 15 and an exchangeable cartridge removably connected to the head portion (details not shown). The cartridge then includes a cation exchange material, particularly a cation exchange resin, arranged for predominantly replacing calcium and magnesium ions by hydrogen ions.

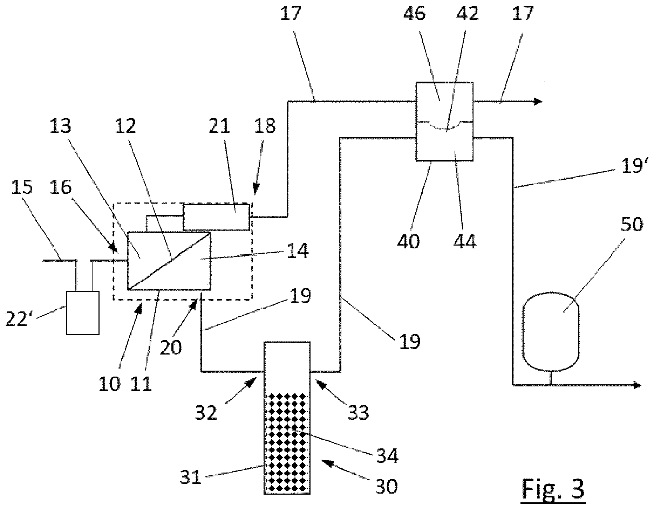

Fig. 3 schematically illustrates a third embodiment of the water purification apparatus according to the invention. The only difference compared to the embodiment of Fig. 2 is that the water treatment device 22 of the ion exchange type is replaced by a gas supply 22'. Accordingly, the gas supply 22' is also put into the untreated water duct 15 upstream of the inlet 16 of the RO-unit 10. It also has an untreated water inlet and a pre-treated water outlet, the pre-treated water outlet being coupled to said inlet 16.

The gas supply 22' comprises a gas container wherein CO₂ gas is stored at a relatively high pressure and a pressure reducing valve to reduce the pressure to an operating CO₂ pressures, preferrably below 1 bar and more preferrably below 0,1 bar, adequate to charge the untreated water with the an amount of CO₂ to achieve the desired CO₂ content of at least 0,1 mmol/l and preferably of at least 0,2 mmol/l in the permeate water being filled into the permeate reservoir.

The CO₂ supply 22' may also be configured to comprise a head portion (not shown) including inlet and outlet connections to the untreated water duct 15 and the pressure reducing valve while the gas container is included in an exchangeable cartridge removably connected to the head portion.

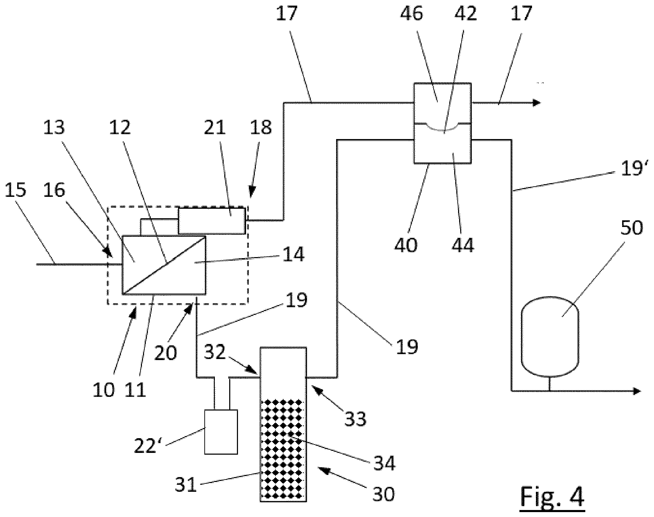

Fig. 4 finally schematically illustrates a fourth embodiment of the water purification apparatus according to the invention. The water treatment device 22' in this embodiment is also of the gas supply type but now arranged at different position. CO₂ gas supply 22' in this case is arranged to communicates with the permeate duct 19 being coupled to the inlet 32 of the buffer storage unit 30. Alternativle the CO₂ gas supply 22' could also be connected directly and independently from the permeate duct 19 to the permeate reservoir 31, e.g. via a separate CO₂ inlet of the bufffer storage unit 30 (not shown). Again the gaseous CO₂ supply 22' is arranged to charge the permeate water with gaseous CO₂ at a pressure adequate to achieve the CO₂ content of at least 0,1 mmol/l and preferably of at least 0,2 mmol/l.

Regarding all embodiments discussed herein above, it is to be noted that an accumulator 50 is not neccesarily required. The permeate water instead could be directly delivered via permeate duct 19' to a consumer or to an appliance such as a coffee dispenser, or the like.

### List of Reference Numbers

- 10: reverse osmosis water purification unit, RO-unit
- 11: membrane housing
- 12: semi-permeable membrane
- 13: concentrate chamber
- 14: permeate chamber
- 15: untreated water duct
- 16: RO-unit inlet
- 17: concentrate duct
- 18: concentrate outlet
- 19, 19': permeate duct
- 20: permeate outlet
- 21: restrictor
- 22: water treatment device, ion exchange cartridge
- 22': water treatment device, CO₂ supply cartridge
- 30: buffer storage unit
- 31: permeate reservoir
- 32: buffer storage unit inlet
- 33: buffer storage unit outlet
- 34: filling material
- 40: permeate pump
- 42: diaphragm
- 44: pump chamber
- 46: working chamber
- 50: accumulator

## Claims

**1.** Method for reverse osmosis water purification comprising:
- receiving untreated or treated water at a first pressure,
- producing permeate water by means of a reverse osmosis water purification unit (RO-unit, 10) at a second pressure that is lower than the first pressure of the untreated or treated water,
- conducting the permeate water from the RO-unit to a buffer storage unit (30) having a permeate reservoir (31), thereby, at least partially, filling the permeate reservoir (31) with the permeate water, the permeate water containing CO₂ dissolved therein,
- conducting the permeate water from the permeate reservoir (31) to a pump chamber (44) of a permeate pump (40),
**wherein**
the permeate reservoir (31) of said buffer storage unit (30) contains a surface, in particular for CO₂ accumulation, whereby, when the permeate water encounters said surface, gaseous CO₂ is accumulated at said surface of the filling material thereby providing a compressible buffer volume.

**2.** Method according to claim 1, **characterized in that** said buffer storage unit (30) contains a filling material (34), in particular a porous filling material (34), activated carbon and/or non-woven material, providing said surface, in particular for CO₂ accumulation.

**3.** Method according to claim 1 or 2, **characterized in that** before the step of producing permeate water, the untreated water is pre-treated by means of a water treatment device (22) and/or the permeate water is treated by means of a water treatment device (22') to such an extent that the CO₂ content of the permeate water being filled into the permeate reservoir (31) amounts to at least 0,1 mmol/l and preferably to at least 0,2 mmol/l.

**4.** Method according to claim 3, **characterized in that** the untreated water is treated by ion exchange, thereby, at least partially, replacing calcium and magnesium ions by hydrogen ions.

**5.** Method according to claim 3 or 4, **characterized in that** the untreated water is treated by supplying gaseous CO₂ to the untreated water or to the permeate water, respectively, at a pressure adequate to achieve the CO₂ content of at least 0,1 mmol/l and preferably of at least 0,2 mmol/l in the permeate water being filled into the permeate reservoir (31).

**6.** Apparatus for reverse osmosis water purification comprising:
- a reverse osmosis water purification unit (RO-unit, 10) having a membrane housing (11) encasing a semi-permeable membrane (12), an inlet (16), a concentrate outlet (18) and a permeate outlet (20), the RO-unit (10) being arranged for receiving untreated or treated water through said inlet (16) at a first pressure and producing permeate water provided via said permeate outlet (18) at a second pressure that is lower than the first pressure of the untreated or treated water,
- a buffer storage unit (30) having a permeate reservoir (31), an inlet (32) being coupled to said permeate outlet (20) of the RO-unit (10) and an outlet (33), and
- a permeate pump (40) having a diaphragm (42) that separates a pump chamber (44) from a working chamber (46), the pump chamber (44) being coupled to said outlet (33) of the buffer storage unit (30) and the working chamber (46) being coupled to said concentrate outlet (18) of the RO-unit (10),
**wherein**
the permeate reservoir (31) of the buffer storage unit (30) contains a plurality of nucleation sites for accumulation of gaseous CO₂.

**7.** Apparatus according to claim 6, **characterized in that** said buffer storage unit (30) contains a filling material (34), in particular a porous filling material (34), activated carbon and/or non-woven material, providing said plurality of nucleation sites for accumulation of gaseous CO₂.

**8.** Apparatus according to claim 7, **characterized in that** the porous filling material (34) provides a porosity of between 40% and 50%.

**8.** Apparatus according to claim 7 or 8, **characterized in that** the porous filling material (34) is a granular filling material comprising particles and in particular comprises at least one material, in particular mineral, contributing to carbonate hardness of the water passing through the permeate reservoir (31).

**9.** Apparatus according to claim 8, **characterized in that** the at least one material, in particular mineral, is selected from calcium carbonate (CaCO₃ - Calcite), magnesium carbonate (MgCO₃ - magnesite), magnesium oxide (MgO) and calcium magnesium carbonate (CaMg(CO₃)₂ - dolomite), calcium oxide (CaO), magnesium hydroxide (Mg(OH)₂) and calcium hydroxide (Ca(OH)₂).

**10.** Apparatus according to one of claims 6 to 9, **characterized in that** the buffer storage unit (30) comprises a head portion including the inlet (32) and the outlet (33) and **in that** the permeate reservoir (31) is formed as an exchangeable cartridge removably connected to the head portion.

**11.** Apparatus according to one of claims 6 to 10, **characterized by** a water treatment device (22, 22') having an untreated water inlet and a treated water outlet, the treated water outlet being coupled to said inlet (16) of the RO-unit (10), the water treatment device being arranged to adjust a CO₂ content of the permeate water being filled into the permeate reservoir (31) to at least 0,1 mmol/l and preferably to at least 0,2 mmol/l.

**12.** Apparatus according to one of claims 6 to 10, **characterized by** a water treatment device (22') having a permeate inlet and a treated water outlet, the permeate inlet being coupled to said permeate outlet (20) of the RO-unit (10) and the treated water outlet being coupled to said inlet (32) of the buffer storage unit (30), the water treatment device being arranged to adjust a CO₂ content of the permeate water being filled into the permeate reservoir (31) to at least 0,1 mmol/l and preferably to at least 0,2 mmol/l.

**13.** Apparatus according to claim 11, **characterized in that** the water treatment device (22) is of the ion exchange type including a cation exchange material arranged for predominantly replacing carbonate ions by hydrogen ions.

**14.** Apparatus to claim 11, **characterized in that** the water treatment device (22') comprises a gaseous CO₂ supply communicating with an untreated water duct being coupled to said inlet (16) of the RO-unit (10) and being arranged to charge the untreated water with gaseous CO₂ at a pressure adequate to achieve the CO₂ of at least 0,1 mmol/l and preferably of at least 0,2 mmol/l in the permeate water being filled into the permeate reservoir (32).

**15.** Apparatus to claim 12, **characterized in that** the water treatment device (22') comprises a gaseous CO₂ supply communicating with a permeate duct being coupled to said inlet (32) of the buffer storage unit (30) or directly communicating with the permeate reservoir (31), respectively, and being arranged to charge the permeate water with gaseous CO₂ at a pressure adequate to achieve the CO₂ content of at least 0,1 mmol/l and preferably of at least 0,2 mmol/l.
